# EUROPÄISCHE PATENTSCHRIFT

(11) **EP 0 670 444 B1**
(45) Veröffentlichungstag und Bekanntmachung des Hinweises auf die Patenterteilung: **13.08.1997**
(21) Anmeldenummer: 95101523.9
(22) Anmeldetag: 15.04.1992
(51) Int. Cl.: F16J 15/32

(54) **Dichtungsanordnung**
Sealing arrangement
Dispositif d'étanchéité

(30) Priorität: 30.04.1991 DE 4114114; 11.12.1991 DE 4140833
(43) Veröffentlichungstag der Anmeldung: 06.09.1995
(62) Teilanmeldung aus: 92908873.0
(73) Patentinhaber: Busak + Shamban GmbH & Co., D-70565 Stuttgart (DE)
(72) Erfinder: Edlund, Roy, D-70771 Echterdingen (DE); Jordan, Holger, D-70771 Leinfelden-Echterdingen (DE); Poethig, Rolf, D-71088 Holzgerlingen (DE)
(74) Vertreter: KOHLER SCHMID + PARTNER

(56) Entgegenhaltungen:
- DE-A- 2 458 529
- DE-C- 3 521 525
- US-A- 4 917 390

## Beschreibung

Die Erfindung geht aus von einer Dichtungsanordnung zwischen zwei zueinander konzentrischen gegeneinander beweglichen Maschinenteilen mit einem Dichtring aus zähelastischem Kunststoff und einem den Dichtring radial spannenden Vorspannring aus einem gummielastischen Werkstoff, wobei das erste Maschinenteil eine Nut aufweist, die den Dichtring und den Vorspannring aufnimmt, und wobei, im drucklosen und/oder stationären Zustand bzw. im drucklosen Zustand, der Dichtring mit einer Dichtfläche an einer Umfangsfläche des zweiten Maschinenteils anliegt und in radialer Richtung zur Achse des zweiten Maschinenteils gesehen, zumindest teilweise von einer niederdruckseitigen Nutflanke der Nut beabstandet ist.

Eine derartige Dichtungsanordnung ist durch die DE-C-35 21 525 bekanntgeworden.

Die bekannte Dichtungsanordnung setzt sich aus einem Dichtring und einem Spannring zusammen, die in einer Nut eines Maschinenteils angeordnet sind. Die zu der abzudichtenden Welle weisende Umfangsfläche des Dichtrings wird durch zwei sich schneidende Kegelflächen gebildet, durch deren Schnittebene bereits eine Dichtkante vorgegeben ist. Im drucklosen Zustand liegt der Dichtring mit einer seiner beiden Kegelflächen auf der abzudichtenden Welle auf. Durch das Abheben dieser ersten Kegelfläche von der Welle unter Druckbeaufschlagung wird ein sich zur Hochdruckseite öffnender Keilspalt gebildet. Der Abhebvorgang ist beendet, wenn die zur Niederdruckseite der Nut weisende axiale Stirnfläche des Dichtrings parallel an der niederdruckseitigen Nutflanke der Nut anliegt. Da in dieser Endposition auch die niederdruckseitige Kegelfläche des Dichtrings nicht auf der Welle aufliegt, ist bei der bekannten Dichtungsanordnung eine Dichtkante unter Druckbeaufschlagung ausgebildet. Dabei muß jedoch der Spannring asymmetrisch ausgebildet sein, um einerseits ein weiteres Abheben der hochdruckseitigen Kegelfläche des Dichtringes zu verhindern und andererseits die erforderliche Anpreßkraft der Dichtkante auf die abzudichtende Welle zu erzeugen.

Aus der DE-A-24 58 529 ist eine Dichtungsanordnung bekannt, bei der der Dichtring im nicht eingebauten Zustand keine ausgeprägte Dichtkante aufweist. Die Dichtkante wird im eingebauten Zustand durch eine Kippbewegung ausgebildet, indem die Radialkraft eines auf den Dichtring wirkenden Spannrings den Dichtring um eine Drehachse kippt. Dabei wirken im drucklosen Zustand nur radial gerichtete Kräfte auf den Dichtring. Ist der bekannte Dichtring druckbeaufschlagt, so wird die Pressung im Bereich der Dichtkante abgeschwächt und der Dichtring kippt zur Niederdruckseite hin und liegt flächenhaft auf der abzudichtenden Fläche an.

Weiterhin ist aus der DE-B-23 25 000 eine Dichtungsanordnung bekannt, die sich durch extrem kleine Lekagen und eine sehr hohe Lebensdauer auszeichnet. Vereinzelt werden jedoch erhöhte Lekagen festgestellt.

Der Erfindung liegt daher die Aufgabe zugrunde, die Dichtwirkung der bekannten Dichtungsanordnung zu verbessern und deren Lebensdauer zu erhöhen.

Diese Aufgabe wird erfindungsgemäß dadurch gelöst, daß der Dichtring eine zur Achse parallele Außenumfangsfläche aufweist, und daß der Dichtring unter Druckbeaufschlagung und/oder durch die Reibkraft zwischen dem Dichtring und der Umfangsfläche derart zur Niederdruckseite N hin verschwenkbar ist, daß der Dichtring an der niederdruckseitigen Nutflanke der Nut anliegt und gegenüber der Umfangsfläche eine Dichtkante ausbildet, die unabhängig von der Verschwenkrichtung und/oder der Druckbeaufschlagung des Dichtrings immer an ein und derselben Stelle angeordnet ist.

Die erfindungsgemäße Dichtungsanordnung hat damit den wesentlichen Vorteil, daß sie ohne ausgeprägte Dichtkante montiert werden kann. Der erfindungsgemäße Dichtring kann problemlos für Anwendungsfälle eingesetzt werden, bei denen Druckwechsel von der einen Nutflanke zur anderen Nutflanke stattfinden.

Wird die Dichtungsanordnung im drucklosen Zustand eingesetzt und für Maschinenteile, die zueinander hin- und herbewegt werden, so verschwenkt sich der Dichtring von einer Einbaustellung in eine Arbeitsstellung derart, daß er immer an die Nutflanke gekippt wird, die entgegen der Bewegungsrichtung des bewegten Maschinenteils am ruhenden Maschinenteil ausgebildet ist. Die Niederdruckseite N entspricht in diesem Fall der Seite, auf die der Dichtring verschwenkt wird.

Der über einen Vorspannring vorgespannte Dichtring bildet mit seinen zu den Nutflanken gerichteten Flächen einen spitzen Winkel, der im drucklosen Zustand zwischen 10° und 40° betragen kann.

Die besonders vorteilhafte Verwendung der erfindungsgemäßen Dichtungsanordnung als Stangen- und Kolbendichtung hat sich auch in Langzeitversuchen bestätigt. Die Standzeiten gegenüber bekannten Dichtungsanordnungen sind bei verringerter Leckrate deutlich erhöht.

Wird der Dichtring aus Polytetrafluorethylen gefertigt, so kann aus einem im drucklosen Zustand symmetrischen Dichtring ein im druckbeaufschlagten Zustand asymmetrischer Dichtring ausgeformt werden. Dabei fließt das Dichtringmaterial in durch Schrägflächen vorgegebene Freiräume, die sich aufgrund des Verschwenkvorganges in der Nut des Maschinenteils einstellen.

Aus Polyurethan gefertigte Dichtringe eignen sich besonders als Kolbendichtungen, weil sie abwechselnd aus unterschiedlichen Richtungen druckbeaufschlagt werden können und auch druckbelastet eine hohe Formstabilität aufweisen. Auch als Rotationsdichtung ist die erfindungsgemäße Dichtungsanordnung einsetzbar.

Dabei wird über eine große Anlagefläche des Dichtrings an der niederdruckseitigen Nutflanke einer Rotationsbewegung mit dem sich bewegenden Maschinenteil entgegen gewirkt.

Als Stangendichtung ist die erfindungsgemäße Dichtungsanordnung auch im drucklosen Zustand einsetzbar. Die Verschwenkbewegung in die Arbeitsstellung erfolgt über die Reibung zwischen Dichtkante und abzudichtender Umfangsfläche.

Es versteht sich, daß auch die Nutflanken gegenüber den gegenüberliegenden Stirnflächen der Dichtringe im drucklosen Zustand geneigt sein können. Der Winkel zwischen Dichtring und niederdruckseitiger Nutflanke ist aber immer zur Umfangsfläche hin offen (Einbaulage). Auch die den Nutflanken zugewandten Stirnflächen des erfindungsgemäßen Dichtrings können unterschiedliche Neigungen aufweisen bzw. sie können gekrümmt sein.

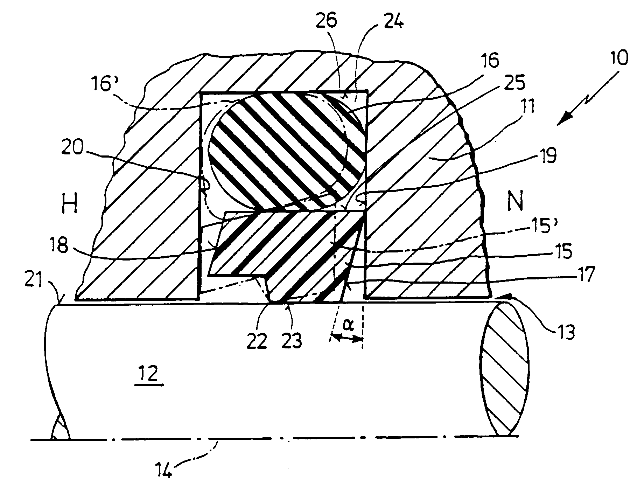

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnte Ausführungsform ist nicht als abschließend zu verstehen, sondern hat vielmehr beispielhaften Charakter.

Die Erfindung ist in der Zeichnung dargestellt und wird anhand von Ausführungsbeispielen näher erläutert.
- Die Figur zeigt: eine erfindungsgemäße Dichtungsanordnung im Querschnitt mit parallelen und zur Symmetrieachse des zweiten Maschinenteils geneigten Dichtringflächen, denen rechtwinklig zur Symmetrieachse ausgerichtete Nutflanken gegenüberstehen.

Die Figur der Zeichnung zeigt teilweise stark schematisiert den erfindungsgemäßen Gegenstand und ist nicht maßstäblich zu verstehen. Die Gegenstände der Figure sind teilweise stark vergrößert dargestellt, damit der Aufbau besser gezeigt werden kann.

Die Figur zeigt eine Dichtungsanordnung 10 mit einem ersten Maschinenteil 11 und einem zweiten Maschinenteil 12. Die Dichtungsanordnung 10 dichtet einen Spalt 13 zwischen den Maschinenteilen 11, 12 ab. Das zweite Maschinenteil 12 kann um eine Achse 14 rotieren, während das erste Maschinenteil 11 raumfest angeordnet ist. In einer weiteren Ausführungsform bewegt sich das zweite Maschinenteil 12 und das erste Maschinenteil 11 ruht. Die Dichtungsanordnung 10 ist auch für den umgekehrten Bewegungsablauf der Maschinenteile 11, 12 einsetzbar, bei dem das zweite Maschinenteil 12 ruht und sich das erste Maschinenteil 11 bewegt. Dabei kann das erste Maschinenteil 11 eine Rotationsbewegung zur Achse 14 bzw. eine Axialbewegung längs der Achse 14 durchführen.

H kennzeichnet in der Figur die Hochdruckseite und N die Niederdruckseite. Eine Außenumfangsfläche 25 des Dichtrings 15 ist parallel zur Achse 14 des zweiten Maschinenteils 12 angeordnet.

Die Dichtungsanordnung 10 ist in der Figur im drucklosen Zustand dargestellt. In einer Nut 24 des ersten Maschinenteils 11 ist ein Dichtring 15 aus einem zähelastischen Material, bevorzugt aus Polytetrafluorethylen oder aus Polyurethan, und ein Vorspannelement 16 aus einem gummielastischen Material angeordnet. Das Vorspannelement 16 stützt sich in der Figur am Nutgrund 26 ab. Die Dichtungsanordnung 10 ist im druckbeaufschlagten Zustand aus der Richtung der eigentlichen Niederdruckseite N aus einem Dichtring 15' und einem Vorspannelement 16' gebildet. Bei dem Vorspannelement 16 handelt es sich bevorzugt um einen O-Ring bzw. um einen Vierlippendichtring. Je nach Vorgabe preßt das Vorspannelement 16 im drucklosen Zustand der Dichtungsanordnung 10 den Dichtring 15 mehr oder weniger stark mit einer vorgegebennen Kraft auf eine Umfangsfläche 21 des zweiten Maschinenteils 12.

Mit einer ersten Dichtringfläche 17, die radial zur Achse 14 gerichtet ist, bildet der Dichtring 15 mit einer niederdruckseitigen Nutflanke 19 einen Winkel α. Der sich dadurch bildende Keilspalt öffnet sich zur Umfangsfläche 21 hin. Im drucklosen Zustand der Dichtungsanordnung beträgt der Winkel α zwischen 10° und 40°.

Wird die Dichtungsanordnung 10 der Figur druckbelastet, so verschwenkt der Dichtring 15 derart, daß sich der Winckel α verkleinert. Dabei bildet sich an der zur Umfangsfläche 21 gerichteten Fläche des Dichtrings 15 eine Dichtkante 22 aus.

Der Dichtring 15, 15' weist die erste Dichtringfläche 17 und eine zweite Dichtringfläche 18 auf, die zur Ebene der Symmetrieachse 14 geneigt und parallel verlaufend ausgebildet sind.

Im drucklosen Zustand berührt der Dichtring 15 die erste Nutflanke 19 und ist von einer zweiten Nutflanke 20 beabstandet. Im druckbeaufschlagten Zustand von der eigentlichen Niederdruckseite N ist der Dichtring 15' von der ersten Nutflanke 19 beabstandet und liegt flächenhaft an der zweiten Nutflanke 20 an. Der Dichtring 15 liegt im drucklosen Zustand auf einer Umfangsfläche 21 des zweiten Maschinenteils 12 flächenhaft an. Im druckbeaufschlagten Zustand von der eigentlichen Niederdruckseite N ist der Dichtring 15' in die in der Figur gezeigte Stellung verschwenkt und dabei ist eine ringförmige Dichtkante 22 ausgebildet. Eine Auflagefläche 23 des Dichtrings 15 im drucklosen Zustand ist im druckbeaufschlagten Zustand von der Umfangsfläche 21, einen Keilwinkel bildend, beabstandet und ist zur Niederdruckseite N hin geöffnet. Der Öffnungswinkel zwischen der Auflagefläche 23 und der Umfangsfläche 21 kann so groß gewählt sein, daß ein Fluid bei einer Hin- und Herbewegung der Maschinenteile 11, 12 vom eigentlichen Niederdruckbereich N in den Hochdrucksbereich H geschleppt werden kann. Dies ist auch dann möglich, wenn im Niederdruckbereich N Schlepp- oder Zwischendrücke entstehen, die größer sind als der Betriebsdruck auf der Hochdruckseite H. Bei der Dichtungsanordnung 10 weist der Dichtring 15, 15' nur eine Dichtkante 22 auf und dies unabhängig von der Verschwenkrichtung oder der Druckbeaufschlagung des Dichtringes 15, 15'. Die Dichtkante 22 ist immer an ein und derselben Stelle angeordnet.

Eine Dichtungsanordnung zwischen zwei konzentrischen gegeneinander beweglichen Maschinenteilen 11, 12 umfaßt einen Dichtring 15 aus zähelastischem Kunststoff und einen den Dichtring 15 radial spannenden Vorspannring 16 aus einem gummielastischen Werkstoff. Das erste Maschinenteil 11 weist eine Nut 24 auf, die den Dichtring 15 und den Vorspannring 16 aufnimmt. Im drucklosen und/oder stationären Zustand liegt der Dichtring 15 mit einer Dichtringfläche 23 an einer Umfangsfläche 21 des zweiten Maschinenteils 12 an. In radialer Richtung zur Achse 14 des zweiten Maschinenteils 12 gesehen ist der Dichtring 15 zumindest teilweise von einer niederdurckseitigen Nutflanke 19 der Nut 24 beabstandet. Der Dichtring 15 weist eine zur Achse 14 parallele Außenumfangsfläche 25 auf. Der Dichtring 15 ist unter Druckbeaufschlagung und/oder durch die Reibkraft zwischen dem Dichtring 15 und der Umfangsfläche 21 derart zur Niederdruckseite N hin verschwenkbar, daß der Dichtring 15 an der niederdruckseitigen Nutflanke 19 der Nut 24 anliegt und gegenüber der Umfangsfläche 21 eine Dichtkante 22 ausbildet, die unabhängig von der Verschwenkrichtung und/oder der Druckbeaufschlagung des Dichtringes 15 immer an ein und derselben Stelle angeordnet ist. Daher wird die Dichtwirkung verbessert und die Lebensdauer der Dichtungsanordnung 10 erhöht.

## Patentansprüche

1. Dichtungsanordnung zwischen zwei konzentrischen gegeneinander beweglichen Maschinenteilen (11, 12) mit einem Dichtring (15) aus zähelastischem Kunststoff und einem den Dichtring (15) radial spannenden Vorspannring (16) aus einem gummielastischen Werkstoff, wobei das erste Maschinenteil (11) eine Nut (24) aufweist, die den Dichtring (15) und den Vorspannring (16) aufnimmt, und wobei, im drucklosen und/oder stationären Zustand, der Dichtring (15) mit einer Dichtringfläche (23) an einer Umfangsfläche (21) des zweiten Maschinenteils (12) anliegt und, in radialer Richtung zur Achse (14) des zweiten Maschinenteils (12) gesehen, zumindest teilweise von einer niederdruckseitigen Nutflanke (19) der Nut (24) beabstandet ist,
dadurch gekennzeichnet,
daß der Dichtring (15) eine zur Achse (14) parallele Außenumfangsfläche (25) aufweist,
und daß der Dichtring (15) unter Druckbeaufschlagung und/oder durch die Reibkraft zwischen dem Dichtring (15) und der Umfangsfläche (21) derart zur Niederdruckseite N hin verschwenkbar ist, daß der Dichtring (15) an der niederdruckseitigen Nutflanke (19) der Nut (24) anliegt und gegenüber der Umfangsfläche (21) eine Dichtkante (22) ausbildet, die unabhängig von der Verschwenkrichtung und/oder der Druckbeaufschlagung des Dichtringes (15) immer an ein und derselben Stelle angeordnet ist.

2. Dichtungsanordnung nach Anspruch 1, dadurch gekennzeichnet, daß im drucklosen Zustand die niederdruckseitige Nutflanke (19) mit einer dazu gegenüberliegenden radial gerichteten ersten Dichtringfläche (17) einen spitzen Winkel α bildet.

3. Dichtungsanordnung nach Anspruch 2, dadurch gekennzeichnet, daß der spitze Winkel α ein Winkel zwischen 10° und 30° ist.

4. Dichtungsanordnung nach einem der Ansprüche 1 bis 3, dadurch gekennzeichnet, daß der Dichtring (15) aus dem Material Polytetrafluorethylen gefertigt ist.

5. Dichtungsanordnung nach einem der Ansprüche 1 bis 4, dadurch gekennzeichnet, daß der Dichtring (15) aus dem Material Polyurethan gefertigt ist.

## Claims

1. Sealing device between two concentric mutually movable machine components (11, 12) with a sealing ring (15) made from a tough-elastic plastic and a biasing ring (16) made from a resilient elastic material which radially biases the sealing ring (15), wherein the first machine component (11) has a groove (24) which accepts the sealing ring (15) and the biasing ring (16) and, in the pressure-less and/or stationary state, the sealing ring (15) seats with a sealing surface (23) on a peripheral surface (21) of the second machine component (12) and, as seen in the radial direction relative to the axis (14) of the second machine component (12), is at least partially separated from a low-pressure side (19) of the groove (24) characterized in that the sealing ring (15) has an outer peripheral surface (25) parallel to the axis (14) and the sealing ring (15) is, under the application of pressure and/or through the frictional force between the sealing ring (15) and the peripheral surface (21), tiltable towards the low-pressure side N in such a fashion that the sealing ring (15) seats on the low-pressure side (19) of the groove (24) and forms a sealing edge (22) with respect to the peripheral surface (21), which is disposed at a constant location independent of the tilt direction and/or of the pressure applied to the sealing ring (15).

2. Sealing device according to claim 1, characterized in that, in the pressure-less state, the low pressure side of the groove (19) forms, with respect to an oppositely lying radially directed first sealing ring surface (17), an acute angle α.

3. Sealing device according to claim 2, characterized in that the acute angle α is an angle between 10° and 30°.

4. Sealing device according to one of the claims 1 through 3, characterized in that the sealing ring (15) is manufactured from polytetrafluoroethylene.

5. Sealing device according to one of the claims 1 through 4, characterized in that the sealing ring (15) is manufactured from polyurethane.

## Revendications

1. Dispositif d'étanchéité entre deux parties de machines (11, 12) concentriques et mobiles l'une par rapport à l'autre, comprenant une bague d'étanchéité (15) en matière plastique viscoélastique, et une bague de précontrainte (16) en matière présentant l'élasticité du caoutchouc qui assure une contrainte radiale sur la bague d'étanchéité (15), la première partie de machine (11) comportant une gorge (24) qui reçoit la bague d'étanchéité (15) et la bague de précontrainte (16) et, dans l'état sans pression et/ou l'état stationnaire, la bague d'étanchéité (15) s'appliqué par une surface de la bague d'étanchéité (23) contre une surface périphérique (21) de la seconde partie de machine (12) et, vue en direction radiale vers l'axe (14) de la seconde partie de machine (12), elle est au moins partiellement écartée d'un flanc (19) côté basse pression de la gorge (24),
caractérisé :
en ce que la bague d'étanchéité (15) présente une surface périphérique extérieure (25) parallèle à l'axe (14),
et en ce que la bague d'étanchéité (15) est susceptible de basculer sous l'action de la pression et/ou sous la force de friction entre la bague d'étanchéité (15) et la surface périphérique (21) en direction du côté basse pression (N), de telle sorte que la bague d'étanchéité (15) s'applique contre le flanc (19) côté basse pression de la gorge (24) et forme vis-à-vis de la surface périphérique (21) une arête d'étanchéité (22) qui est toujours agencée au même endroit, indépendamment de la direction de basculement et/ou de l'action de la pression sur la bague d'étanchéité (15).

2. Dispositif d'étanchéité selon la revendication 1, caractérisé en ce que, dans l'état sans pression, le flanc (19) côté basse pression de la gorge forme un angle aigu α avec une première surface (17), dirigée radialement en sens opposé à celui-ci, de la bague d'étanchéité.

3. Dispositif d'étanchéité selon la revendication 2, caractérisé en ce que l'angle aigu α est un angle entre 10° et 30°.

4. Dispositif d'étanchéité selon l'une quelconque des revendications 1 à 3, caractérisé en ce que la bague d'étanchéité (15) est réalisée en polytétrafluoroéthylène.

5. Dispositif d'étanchéité selon l'une quelconque des revendications 1 à 4, caractérisé en ce que la bague d'étanchéité (15) est réalisée en polyuréthane.
